# EUROPEAN PATENT SPECIFICATION

(11) **EP 3 416 316 B1**
(45) Date of publication and mention of the grant of the patent: **25.09.2019**
(21) Application number: 17305721.7
(22) Date of filing: 14.06.2017
(51) Int. Cl.: H04J 14/02, H04Q 11/00

(54) **OPTICAL LINE CARD AND TRANSMITTER**
KARTE UND SENDER MIT OPTISCHER LEITUNG
CARTE DE LIGNE OPTIQUE ET ÉMETTEUR

(43) Date of publication of application: 19.12.2018
(73) Proprietor: Nokia Solutions and Networks Oy, 02610 Espoo (FI)
(72) Inventor: DUPAS, Arnaud, 91620 Nozay (FR); LAYEC, Patricia, 91620 Nozay (FR)
(74) Representative: Croonenbroek, Thomas Jakob

(56) References cited:
- US-A1- 2001 013 963

## Description

### BACKGROUND OF THE INVENTION

The present invention relates to the field of communication networks and more precisely of optical line cards used in optical transmission. US2001013963 discloses an optical network access node comprising laser sources which emit light at the wavelengths of optical network, whose light can be modulated in user devices. It is possible with this configuration to change the wavelength of user devices without changing the line card of the user device since respective wavelengths are generated in access-node and transmitted from there to individual user devices.

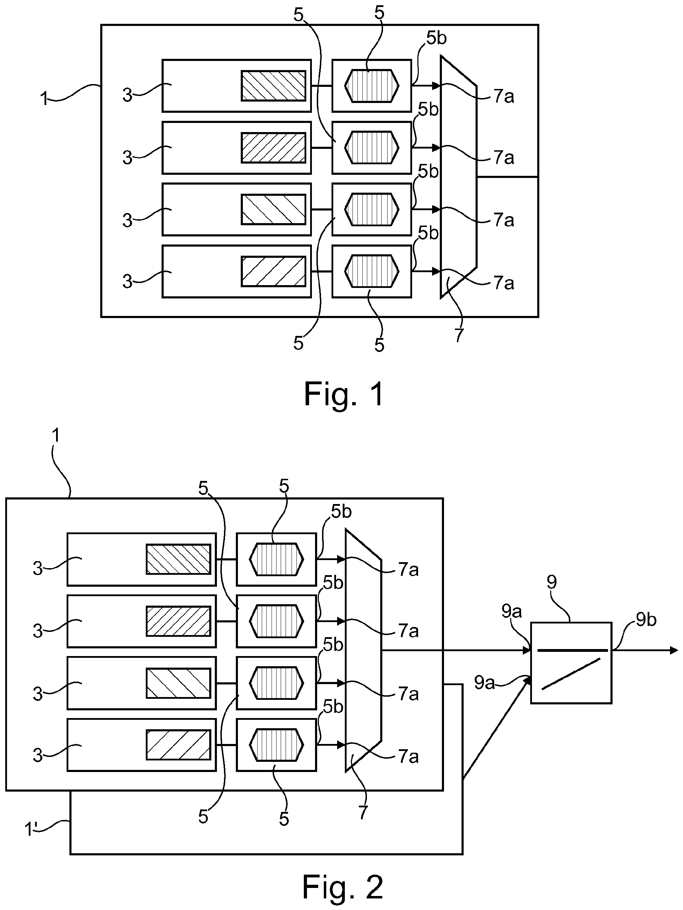

Optical line card are known to gather the different elements required for transmitting a multiplexed optical signal. Fig.1 represents an example of a diagram of an optical line card 1 of the state of the art. The optical line card 1 comprises a plurality of laser sources 3 (four in the present case) associated with a respective plurality of modulators 5 and an optical multiplexer 7 having a plurality of inputs 7a linked to the output 5b of the respective plurality of modulators 5.

Furthermore, in order to overcome any failure of an element of the optical line card 1 which could lead to an interruption of the transmission of the optical signals, it is also known to use a second optical line card 1' as protection optical line card as disclosed in Fig.2. The protection line card 1' is identical to the first optical line card 1 and is used in case of failure in the first optical line card 1. To achieve this, the output of both optical line cards 1 and 1' are linked to a protection switch 9 comprising two inputs 9a and one output 9b and capable of linking its output 9b to the first or the second input 9a. Thus, in case of a failure in the first optical line card 1, the protection switch 9 is switched to its second state and the protection optical line card 1' is used.

However, such configuration is expensive and lacks modularity. Indeed, both optical line card must be fully equipped to provide protection even if the failure occurs only on one element of the optical line card. Moreover, the optical line card cannot be upgraded to a higher number of channels (for example in case of an increase of traffic so that the optical line card must be replaced by another optical line card having a higher capacity (comprising more than four channels in the present case).

It is then needed to have a better solution with higher modularity and lower cost.

### SUMMARY OF THE INVENTION

The invention aims to remedy all or some of the disadvantages of the above identified prior art. The present invention that particularly offers a modular and low cost solution, refers to an optical line card comprising:
- a first tunable laser ,
- a second tunable laser,
- a first optical switch comprising a first input linked to the first tunable laser, a second input linked to the second tunable laser, a first output which can be linked to the first or to the second input, a second output which can be linked to the first or to the second input,
- a dual modulation unit comprising:
   - a first modulator configured for modulating a first signal received on a first input linked to the first output of the first optical switch, the first modulated signal being transmitted to a first output,
   - a second modulator configured for modulating a second signal received on a second input linked to the second output of the first optical switch, the second modulated signal being transmitted to a second output,
- a first optical circulator comprising a first input/output port linked to the first output of the dual modulation unit and a second input/output port,
- a second optical circulator comprising a first input/output port linked to the second output of the dual modulation unit and a second input/output port,
- a second optical switch comprising a first input linked to the second input/output port of the first optical circulator and a second input linked to the second input/output port of the second optical circulator.

According to another aspect of the present invention, the optical line card also comprises a processing unit configured for controlling the configuration of the first and the second optical switches.

According to another aspect of the present invention, the processing unit is configured for controlling the configuration of the first and the second optical switches according to the state of the first and the second tunable laser, the state of the first and the second modulators and from received control signals.

According to another aspect of the present invention, the control signals are sent by a network control plane unit.

According to another aspect of the present invention, the elements of the optical line card are implemented in an integrated circuit.

According to another aspect of the present invention, the second optical switch comprises a reflection mode wherein the signals received on its first and its second inputs are transmitted toward its second input.

According to another aspect of the present invention, the first and the second optical circulators comprise a third input/output port.

The present invention also refers to an optical transmitter comprising at least a first and a second optical line cards as described previously wherein the third input/output port of the second optical circulator of an optical line card is configured to be linked to the third input/output port of the first optical circulator of the next optical line card.

According to another aspect of the present invention, to produce an output signal corresponding to a wavelength division multiplexing signal, the tunable lasers are tuned to different wavelengths from each other, the first optical switches are configured to link their first input to their first output, the second optical switch of the optical line cards except the last optical line card are set in a reflection mode and the second optical switch of the last optical line card is configured to transmit the multiplexed signal on its first output.

### BRIEF DESCRIPTION OF THE DRAWINGS

FIG.1 is a diagram of an optical line card according to the state of the art,
FIG.2 is a diagram of a transmitter comprising a first optical line card and a protection optical line card according to the state of the art,
FIG.3 is a diagram of an optical line card according to the present invention,
FIG.4 is a diagram of a first configuration of an optical line card according to the present invention,
FIG.5 is a diagram of a second configuration of an optical line card according to the present invention;
FIG.6 is a diagram of a third configuration of an optical line card according to the present invention;
FIG.7 is a diagram of a fourth configuration of an optical line card according to the present invention;
FIG.8 is a diagram of a transmitter comprising a plurality of optical line cards according to the present invention;

### DETAILED DESCRIPTION OF THE INVENTION

The following embodiments are examples. Although the description refers to one or several embodiments, it does not mean necessarily that the features apply only to a single embodiment. Simple features of the different embodiments may be combined to provide additional embodiments.

In the following description, some elements can be indexed such as a first element and a second element. In such case, it refers to a simple indexing to differentiate and name elements having similar functions. Such indexing does not imply any priority of one element with respect to another or a temporal order.

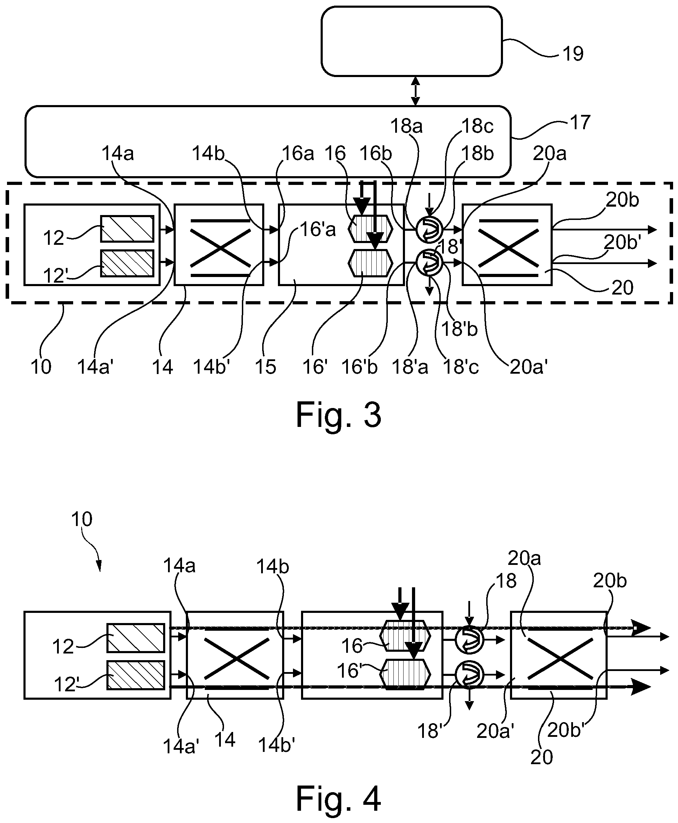

Fig.3 represent an optical line card 10 comprising a first 12 and a second 12' tunable lasers which can be implemented in a common module or common integrated circuit or in two different modules. The respective outputs of the first 12 and the second 12' tunable lasers are coupled to a first 14a and a second 14a' inputs of a first optical switch 14. The first optical switch 14 is a 2^{∗}2 optical switch also called cross-bar type switch with two inputs 14a and 14a' and two outputs 14b and 14b', the optical switch 14 being able to transmit a signal received on an input 14a, 14a' to the first output 14b or to the second output 14b' (it is also possible to transmit toward both the first 14b and the second 14b' output) or to block a signal received on an input 14a, 14a'. The outputs 14b and 14b' of the first optical switch 14 are respectively coupled to a first modulator 16 via a first input 16a and to a second modulator 16' via a second input 16'a. The two modulators 16, 16' may be implemented on a common module, for example a dual modulation unit 15 corresponding to a common integrated circuit or on two separated modules. The modulators 16, 16' are configured for receiving an optical signal from one of the tunable lasers 12, 12' corresponding to a carrier signal and data signal from a data processing unit 17 and for modulating the carrier signal according to the data signal. The data processing unit 17 may be connected to a network control plan unit 19 such as a Software Defined Network (SDN) agent. The data processing unit 17 may be implemented within the optical line card 10. The network control plane unit 19 can be implemented in the same module as the data processing unit 17 or in a separated module. The network control plane unit 19 can be embedded in a microprocessor or a Field-Programable Gate Array (FPGA). The network control plane unit 19 is for example connected to a software defined network (SDN) controller.
The outputs 16b and 16'b of the modulators 16 and 16' are respectively coupled to a first 18 and a second 18' optical circulators. Each circulator 18, 18' has for example three input/output ports noted herein 18a, 18b, 18c for the first circulator 18 and 18'a, 18'b, 18'c for the second circulator 18'. The first input/output ports 18a and 18'a are respectively coupled to the first 16 and the second 16' modulators and the second input/output ports 18b and 18'b are respectively coupled to a first 20a and a second 20a' inputs of a second optical switch 20. The optical circulators 18, 18' are configured for transmitting the signal received on their first input/ouput port 18a, 18'a toward its second input/output port 18b, 18'b. The second optical switch 20 is a 2^{∗}2 optical switch with two inputs 20a and 20a' and two outputs 20b and 20b', the optical switch 20 being able to transmit a signal received on an input 20a, 20a' to the first output 20b or to the second output 20b' (it is also possible to transmit toward both the first 20b and the second 20b' output). The second optical switch 20 is also configurable for reflecting back a signal received on its first 20a and/or its second 20a' inputs toward one of its inputs 20a, 20a', for example the second input 20a' in a reflection mode. The first 14 and the second 20 optical switches are for example driven by a processing unit (not represented). Such processing unit may be implemented together with the data processing unit 17 within the optical line card 10.

The architecture of the optical line card 10 described in Fig.3 enables different configurations which allows an enhanced modularity. The different configurations will now be described.

### 1) Sliceable transmitter

According to a first configuration represented in Fig.4, the optical line card 10 can be used to transmit two different signals to two different destinations, for example to two different egress nodes. Such transmission is achieved by configuring the first optical switch 14 to transmit the signals on its first 14a and its second 14a' inputs respectively to its first 14b and its second 14b' outputs. The two signals are therefore transmitted respectively to the first 16 and the second 16' modulators. The two modulated signals are then transmitted to the second optical switch 20 via respectively the first 18 and the second 18' optical circulators. The second optical switch 20 is configured for transmitting the signal received on its first input 20a toward its first output 20b and the signal received on its second input 20a' toward its second output 20b'. The two modulated signals may then be transmitted toward their respective destinations. Using n optical line cards 10 as described in Fig.4 enables therefore to create a sliceable transmitter capable of transmitting 2n optical signals toward 2n different destinations.

### 2) Protection

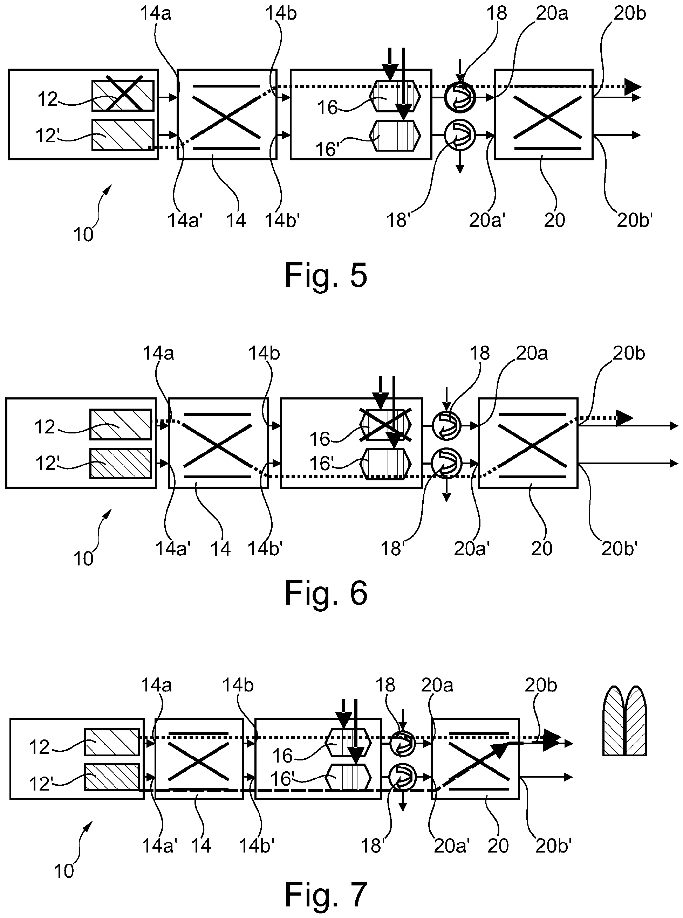

According to a second configuration represented in Figs.5 and 6, the optical line card 10 can be used to transmit a single signal and for providing a protection in case of a failure of a tunable laser 12, for example or a modulator 16, for example, the second tunable laser 12' and the second modulator 16' are for example used as protection for the first tunable laser 12 and the first modulator 16. It is therefore supposed that the first tunable laser 12 and the first modulator 16 are used for the signal transmission.

### a) Tunable laser protection

In case of a failure of the first tunable laser 12 as represented in Fig.5 by the cross, the second tunable laser 12' is activated and set as the same frequency as the first tunable laser 12. The first optical switch 14 is configured for transmitting the signal received on its second input 14a' (linked to the second tunable laser 12') toward its first output 14b (linked to the first modulator 16) and the second optical switch 20 is configured for transmitting the signal received on its first input 20a (linked to the first modulator 16 via the first optical circulator 18) toward its first output 20b.

### b) Modulator protection

In case of failure of the first modulator 16 as represented by the cross in Fig.6, the first optical switch 14 is configured for transmitting the signal received on its first input 14a (linked to the first tunable laser 12) toward its second output 14b' (linked to the second modulator 16') so that the signal provided by the first tunable laser 12 is transmitted to the second modulator 16'. The second optical switch 20 is configured for transmitting the signal received on its second input 20a' (linked to the second modulator 16' via the second optical circulator 18') toward its first output 20b.

c) In the same way, in case of failure of both the first tunable laser 12 and the first modulator 16, the first 14 and the second 20 optical switches can be configured so that the second tunable laser 12' and the second modulator 16' are used for the signal transmission of the signal.

### 3) Wavelength multiplexing

According to a third configuration represented in Fig.7, the optical line card 10 can be used to transmit a multiplexed signal comprising two different wavelength channels, also called 'super-channels', corresponding to the wavelength of the first 12 and the second 12' tunable lasers. The first optical switch 14 is configured to transmit the signal received on its first input 14a (linked to the first tunable laser 12) toward its first output 14b (linked to the first modulator 16) and to transmit the signal received on its second input 14a' (linked to the second tunable laser 12') toward its second output 14b' (linked to the second modulator 16'). The second optical switch 20 is configured for transmitting the signal received on its first 20a and its second 20a' inputs toward its first output 20b so that the two signals transmitted by the first 16 and the second 16' modulators are multiplexed and transmitted to the first output 20b of the second optical switch 20.

### 4) Cascading

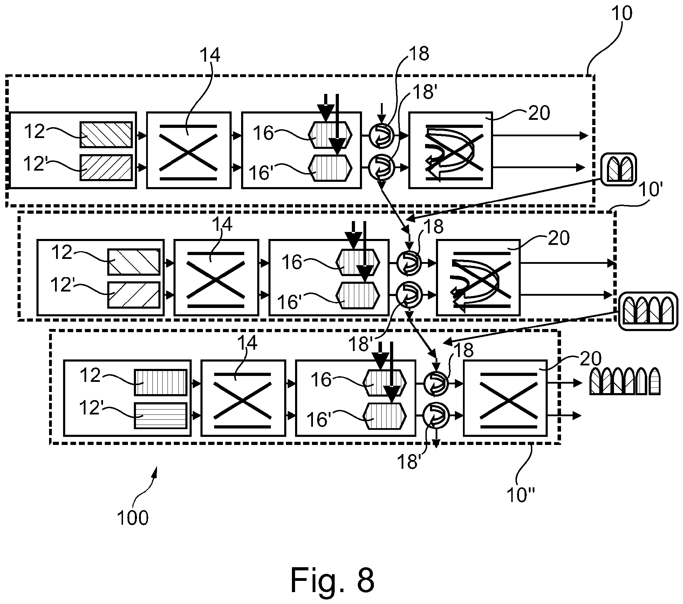

Using several optical line cards 10, it is also possible to cascade the different optical line cards 10 in order to provide an upgrade of a transmitter 100, as represented in Fig. 8. Such upgrade enables adding two additional channels (per added optical line card 10) in order to produce a multiplexed signal. In order to obtain such result, the different optical line cards 10 are connected by their optical circulators 18 and 18'.

The third input/output port 18'c of a second optical circulator 18' of a given optical line card 10 is linked to the third input/output port 18c of a first optical circulator 18 of a next optical line card 10 as represented in Fig.8 in the case of three cascaded optical line cards noted 10, 10' and 10". In such configuration, the third input/ouput port 18c of the first optical circulator 18 of the first optical line card 10 and the third input/output port 18'c of the second optical circulator 18' of the last optical line card 10" are not used.

In order to produce a multiplexed signal comprising a plurality of neighbouring channels, the different tunable lasers of the cascaded optical line cards 10, 10' and 10" are tuned to the different frequencies corresponding to the central frequency of each channel of the multiplexed signal.

The first optical switches 14 are configured to transmit the signals received on their respective inputs 14a and 14a' toward their respective outputs 14b and 14b'. The signals provided by the respective first 12 and second 12' tunable lasers are then modulated by the respective first 16 and second 16' modulators.

The first optical circulators 18 of the optical line cards 10' and 10" (except for the first optical line card 10) are configured for transmitting the signals received on their first 18a and third 18c input/output ports toward their second input/output port 18b. The first optical circulator 18 of the first optical line card 10 is configured for transmitting the signal received on its first input/output port 18a toward its second input/output port 18b.

The second optical circulators 18' of the optical line cards 10, 10' (except for the last optical line card 10") are configured for transmitting the signals received on their first input/output port 18'a toward their second input/output port 18'b and for transmitting the signals received on their second input/output port 18'b toward their third input/output port 18'c. The second optical circulator 18' of the last optical line card 10" is configured for transmitting the signal received on its first input/output port 18'a toward its second input/output port 18'b.

The second optical switches 20 of the optical line cards 10, 10' (except for the last optical line card 10") are configured in the reflection mode so that the signals received on the first 20a and the second 20a' inputs of the second optical switches 20 are transmitted to their second input 20a'. The second optical switch 20 of the last optical line card 10" is configured for transmitting the signals received on its first 20a and second 20a' inputs toward its first output 20b.

Thus, with such configuration, the two signals provided by an optical line card 10, 10', 10" are multiplexed with the signals provided by the other optical line cards 10, 10', 10". The number n of cascaded optical line cards 10 enables to obtain a multiplexed signal comprising 2n channels. In Fig.7, the multiplexed signal transmitted from one optical line card to the next is represented and the signal obtained at the first output 20b of the last optical line card 10" comprises six channels as three different optical line cards 10, 10' and 10" are cascaded in this example.

It is also possible to combine the different configurations presented previously, for example to obtained a multiplexed signal combined with protection of some or all different channels (a higher number of optical line cards 10 is then required to obtain the same number of channels). Any number of optical line cards 10 can be combined.

Thus, the architecture of the optical line cards 10 presented previously enables obtaining different functions depending on the configuration of the optical line card 10 and provides therefore a great modularity with a limited number of elements. Furthermore, it is easy to combine several optical line cards 10 in order to obtain an upgraded transmitter 100 with a higher capacity or with additional protection or capacity.

The present invention also refers to an optical transmitter 100 comprising at least one optical line card 10 as described previously. The transmitter 100 may also comprise a data processing unit 17, which can also be implemented within the optical line card 10. In the case of an optical transmitter 100 comprising several optical line cards 10, the third input/output port 18'c of the second optical circulator 18' of an optical line card 10 is configured to be linked to the third input/output 18c of the first optical circulator 18 of the next optical line card 10.

The functions of the various elements shown in the Figs., including any functional blocks labeled as "processors" or "processing units", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

In particular, the presented optical line card may be implemented in a photonic integrated circuit (PIC) and the optical switch may be implemented as micro opto electro mechanical system (MEMS).

## Claims

1. Optical transmitter (100) comprising at least a first (10) and a second (10') optical line cards, an optical line card (10, 10', 10") comprising:
- a first tunable laser (12),
- a second tunable laser (12'),
- a first optical switch (14) comprising a first input (14a) linked to the first tunable laser (12), a second input (14a') linked to the second tunable laser (12'), a first output (14b) which can be linked to the first (14a) or to the second (14a') input, a second output (14b') which can be linked to the first (14a) or to the second (14a') input,
- a dual modulation unit (15) comprising:
- a first modulator (16) configured for modulating a first signal received on a first input (16a) linked to the first output (14b) of the first optical switch (14), the first modulated signal being transmitted to a first output (16b),
- a second modulator (16') configured for modulating a second signal received on a second input (16'a) linked to the second output (14b') of the first optical switch (14), the second modulated signal being transmitted to a second output (16'b),
- a first optical circulator (18) comprising a first input/output port (18a) linked to the first output (16b) of the dual modulation unit (15) and a second input/output port (18b),
- a second optical circulator (18') comprising a first input/output port (18'a) linked to the second output (16'b) of the dual modulation unit (15) and a second input/output port (18'b),
- a second optical switch (20) comprising a first input (20a) linked to the second input/output port (18b) of the first optical circulator (18) and a second input (20a') linked to the second input/output port (18'b) of the second optical circulator (18'),
wherein the first (18) and the second (18') optical circulators comprise a third input/output port (18c, 18'c), the third input/output port (18'c) of the second optical circulator (18') of an optical line card (10) is configured to be linked to the third input/output port (18c) of the first optical circulator (18) of the next optical line card (10').

2. Optical transmitter (100) in accordance with claim 1 wherein an optical line card (10, 10', 10") also comprises a processing unit configured for controlling the configuration of the first (14) and the second (20) optical switches.

3. Optical transmitter (100) in accordance with claim 2 wherein the processing unit is configured for controlling the configuration of the first (14) and the second (20) optical switches according to the state of the first (12) and the second (12') tunable laser, the state of the first (16) and the second (16') modulators and from received control signals.

4. Optical transmitter (100) in accordance with claims 3 wherein the control signals are sent by a network control plane unit (19).

5. Optical transmitter (100) in accordance with one of the previous claims wherein the elements of an optical line card (10) are implemented in an integrated circuit.

6. Optical transmitter (100) in accordance with one of the previous claims wherein the second optical switch (20) comprises a reflection mode wherein the signals received on its first (20a) and its second (20a') inputs are transmitted toward its second input (20a').

7. Optical transmitter (100) in accordance with claim 6 wherein to produce an output signal corresponding to a wavelength division multiplexing signal, the tunable lasers (12, 12') are tuned to different wavelengths from each other, the first optical switches (14) are configured to link their first input (14a) to their first output (14b), the second optical switch (20) of the optical line cards (10, 10') except the last optical line card (10") are set in a reflection mode and the second optical switch (20) of the last optical line card (10") is configured to transmit the multiplexed signal on its first output (20b).

## Patentansprüche

1. Optischer Sender (100), der mindestens eine erste (10) und eine zweite (10') optische Line-Card umfasst, wobei eine optische Line-Card (10, 10', 10") Folgendes umfasst:
- ersten abstimmbaren Laser (12),
- zweiten abstimmbaren Laser (12'),
- ersten optischen Schalter (14), umfassend einen ersten Eingang (14a), der mit dem ersten abstimmbaren Laser (12) verbunden ist, einen zweiten Eingang (14a'), der mit dem zweiten abstimmbaren Laser (12') verbunden ist, einen ersten Ausgang (14b), der mit dem ersten (14a) oder dem zweiten (14a') Eingang verbunden werden kann, einen zweiten Ausgang (14b'), der mit dem ersten (14a) oder mit dem zweiten (14a') Eingang verbunden werden kann,
- Zweifach-Modulationseinheit (15), umfassend:
- ersten Modulator (16), der zum Modulieren eines ersten Signals ausgelegt ist, das an einem ersten Eingang (16a) empfangen wird, der mit dem ersten Ausgang (14b) des ersten optischen Schalters (14) verbunden ist, wobei das erste modulierte Signal an einen ersten Ausgang (16b) übertragen wird,
- zweiten Modulator (16'), der zum Modulieren eines zweiten Signals ausgelegt ist, das an einem zweiten Eingang (16'a) empfangen wird, der mit dem zweiten Ausgang (14b') des ersten optischen Schalters (14) verbunden ist, wobei das zweite modulierte Signal an einen zweiten Ausgang (16'b) übertragen wird,
- ersten optischen Zirkulator (18), umfassend einen ersten Ein-/Ausgangsport (18a), der mit dem ersten Ausgang (16b) der Zweifach-Modulationseinheit (15) verbunden ist, und einen zweiten Ein-/Ausgangsport (18b),
- zweiten optischen Zirkulator (18'), umfassend einen ersten Ein-/Ausgangsport (18'a), der mit dem zweiten Ausgang (16'b) der Zweifach-Modulationseinheit (15) verbunden ist, und einen zweiten Ein-/Ausgangsport (18'b),
- zweiten optischen Schalter (20), umfassend einen ersten Eingang (20a), der mit dem zweiten Ein-/Ausgangsport (18b) des ersten optischen Zirkulators (18) verbunden ist, und einen zweiten Eingang (20a'), der mit dem zweiten Ein-/Ausgangsport (18'b) des zweiten optischen Zirkulators (18') verbunden ist,
wobei der erste (18) und der zweite (18') optische Zirkulator einen dritten Ein-/Ausgangsport (18c, 18'c) umfassen, wobei der dritte Ein-/Ausgangsport (18'c) des zweiten optischen Zirkulators (18') einer optischen Line-Card (10) dafür ausgelegt ist, mit dem dritten Ein-/Ausgangsport (18c) des ersten optischen Zirkulators (18) der nächsten optischen Line-Card (10') verbunden zu werden.

2. Optischer Sender (100) nach Anspruch 1, wobei eine optische Line-Card (10, 10', 10") auch eine Verarbeitungseinheit umfasst, die zum Steuern der Auslegung des ersten (14) und des zweiten (20) optischen Schalters ausgelegt ist.

3. Optischer Sender (100) nach Anspruch 2, wobei die Verarbeitungseinheit dafür ausgelegt ist, die Auslegung des ersten (14) und des zweiten (20) optischen Schalters entsprechend dem Zustand des ersten (12) und des zweiten (12') abstimmbaren Lasers, dem Zustand des ersten (16) und des zweiten (16') Modulators und von empfangenen Steuersignalen zu steuern.

4. Optischer Sender (100) nach Anspruch 3, wobei die Steuersignale von einer Netzwerksteuerungseinheit (19) gesendet werden.

5. Optischer Sender (100) nach einem der vorhergehenden Ansprüche, wobei die Elemente einer optischen Line-Card (10) in einer integrierten Schaltung implementiert sind.

6. Optischer Sender (100) nach einem der vorhergehenden Ansprüche, wobei der zweite optische Schalter (20) einen Reflexionsmodus umfasst, bei dem die an seinem ersten (20a) und zweiten (20a') Eingang empfangenen Signale zu seinem zweiten Eingang (20a') übertragen werden.

7. Optischer Sender (100) nach Anspruch 6, wobei zum Erzeugen eines einem Wellenlängenmultiplexsignal entsprechenden Ausgangssignals die abstimmbaren Laser (12, 12') auf voneinander verschiedene Wellenlängen abgestimmt sind, die ersten optischen Schalter (14) dafür ausgelegt sind, ihren ersten Eingang (14a) mit ihrem ersten Ausgang (14b) zu verbinden, der zweite optische Schalter (20) der optischen Line-Cards (10, 10') mit Ausnahme der letzten optischen Line-Card (10") in einem Reflexionsmodus eingestellt sind und der zweite optische Schalter (20) der letzten optischen Line-Card (10") dafür ausgelegt ist, das gemultiplexte Signal auf seinem ersten Ausgang (20b) zu übertragen.

## Revendications

1. Émetteur optique (100) comprenant au moins une première (10) et une deuxième (10') cartes de ligne optique, une carte de ligne optique (10, 10', 10") comprenant :
- un premier laser accordable (12),
- un deuxième laser accordable (12'),
- un premier commutateur optique (14) comprenant une première entrée (14a) raccordée au premier laser accordable (12), une deuxième entrée (14a') raccordée au deuxième laser accordable (12'), une première sortie (14b) qui peut être raccordée à la première (14a) ou à la deuxième (14a') entrée, une deuxième entrée (14b') qui peut être raccordée à la première (14a) ou à la deuxième (14a') entrée,
- une unité de double modulation (15) comprenant :
- un premier modulateur (16) configuré pour moduler un premier signal reçu sur une première entrée (16a) raccordée à la première sortie (14b) du premier commutateur optique (14), le premier signal modulé étant transmis à une première sortie (16b),
- un deuxième modulateur (16') configuré pour moduler un deuxième signal reçu sur une deuxième entrée (16'a) raccordée à la deuxième sortie (14b') du premier commutateur optique (14), le deuxième signal modulé étant transmis à une deuxième sortie (16'b),
- un premier circulateur optique (18) comprenant un premier port d'entrée/sortie (18a) raccordé à la première sortie (16b) de l'unité de double modulation (15) et un deuxième port d'entrée/sortie (18b),
- un deuxième circulateur optique (18') comprenant un premier port d'entrée/sortie (18'a) raccordé à la deuxième sortie (16'b) de l'unité de double modulation (15) et un deuxième port d'entrée/sortie (18'b),
- un deuxième commutateur optique (20) comprenant une première entrée (20a) raccordée au deuxième port d'entrée/sortie (18b) du premier circulateur optique (18) et une deuxième entrée (20a') raccordée au deuxième port d'entrée/sortie (18'b) du deuxième circulateur optique (18'),
dans lequel le premier (18) et le deuxième (18') circulateurs optiques comprennent un troisième port d'entrée/sortie (18c, 18'c), le troisième port d'entrée/sortie (18'c) du deuxième circulateur optique (18') d'une carte de ligne optique (10) est configuré pour être raccordé au troisième port d'entrée/sortie (18c) du premier circulateur optique (18) de la carte de ligne optique suivante (10').

2. Émetteur optique (100) selon la revendication 1 dans lequel une carte de ligne optique (10, 10', 10") comprend également une unité de traitement configurée pour contrôler la configuration des premier (14) et deuxième (20) commutateurs optiques.

3. Émetteur optique (100) selon la revendication 2 dans lequel l'unité de traitement est configurée pour contrôler la configuration des premier (14) et deuxième (20) commutateurs optiques en fonction de l'état des premier (12) et deuxième (12') lasers accordables, de l'état des premier (16) et deuxième (16') modulateurs et de signaux de contrôle reçus.

4. Émetteur optique (100) selon la revendication 3 dans lequel les signaux de contrôle sont envoyés par une unité (19) du plan de contrôle du réseau.

5. Émetteur optique (100) selon une des revendications précédentes dans lequel les éléments d'une carte de ligne optique (10) sont mis en oeuvre dans un circuit intégré.

6. Émetteur optique (100) selon une des revendications précédentes dans lequel le deuxième commutateur optique (20) comprend un mode réflexion dans lequel les signaux reçus sur sa première (20a) et sa deuxième (20a') entrées sont transmis vers sa deuxième entrée (20a').

7. Émetteur optique (100) selon la revendication 6 dans lequel, pour produire un signal de sortie correspondant à un signal de multiplexage par répartition en longueur d'onde, les lasers accordables (12, 12') sont accordés sur différentes longueurs d'onde l'un par rapport à l'autre, les premiers commutateurs optiques (14) sont configurés pour raccorder leur première entrée (14a) à leur première sortie (14b), le deuxième commutateur optique (20) des cartes de ligne optique (10, 10') excepté la dernière carte de ligne optique (10") sont réglés dans un mode réflexion et le deuxième commutateur optique (20) de la dernière carte de ligne optique (10") est configuré pour transmettre le signal multiplexé sur sa première sortie (20b).
